# EUROPEAN PATENT SPECIFICATION

(11) **EP 2 365 560 B1**
(45) Date of publication and mention of the grant of the patent: **09.05.2012**
(21) Application number: 10002451.2
(22) Date of filing: 09.03.2010
(51) Int. Cl.: H01M 2/10, H01M 2/20, H01M 10/50

(54) **Battery pack with lead-plates**
Batteriepack mit Leitungsplatten
Bloc-batterie avec plaques conductrices

(43) Date of publication of application: 14.09.2011
(73) Proprietor: SANYO Electric Co., Ltd., Moriguchi City Osaka 570-8677 (JP); Yamaha Hatsudoki Kabushiki Kaisha, Shizuoka-ken 438-8501 (JP)
(72) Inventor: Yoneda Haruhiko c/o Intellectual Property H.Q.,, Moriguchi City, Osaka 570-8677 (JP); Fukukawa Kouichi c/o Intellectual Property H.Q.,, Moriguchi City, Osaka 570-8677 (JP); Haino Masami c/o Intellectual Property H.Q., Moriguchi City, Osaka 570-8677 (JP); Yoneyama Shingo c/o Intellectual Property H.Q., Moriguchi City, Osaka 570-8677 (JP); Terada Junji c/o Yamaha Hatsudoki Kabushiki Kaisha, 438-8501 (JP); Kondo Toshiro c/o Yamaha Hatsudoki Kabushiki Kaisha, 438-8501 (JP)
(74) Representative: Beier, Ralph

(56) References cited:
- WO-A1-2008/093182
- JP-A- 2004 171 856
- JP-A- 2009 176 689

## Description

### BACKGROUND OF THE INVENTION

### 1. Field of the Invention

The present invention relates to a battery pack with lead-plates weld-attached to electrodes at the ends of a plurality rechargeable batteries. In particular, the present invention relates to a battery pack in which heat is radiated from each battery via the lead-plates.

### 2. Description of the Related Art

For a battery pack that has a plurality of batteries connected in series or parallel by lead-plates, it is important for each battery to efficiently radiate heat. Particularly in a battery pack with many batteries connected in series and parallel and having high charging and discharging currents, it is important to efficiently radiate the heat generated by the batteries. To achieve this, a battery pack has been developed that radiates heat from the lead-plates connecting the batteries. (Refer to Japanese Laid-Open Patent Publication No. 2005-317456.)

In the battery pack of JP 2005-317456 A, lead projections are established on the lead-plates, and heat is radiated from the batteries through the lead-plates by radiating lead-plate heat from the lead projections. Since heat is radiated from the lead projections of a battery pack with this structure, it is difficult to increase the heat radiating area. Furthermore, since the lead projections connect with battery electrodes and are charged to those voltages, they cannot protrude outside the external case to radiate heat.

To enlarge the heat radiating area, a battery pack has been developed that utilizes the external case for heat radiation. (Refer to Japanese Laid-Open Patent Publication No. 2001-76696.) In the battery pack of JP 2001-76696 A, the external case houses a plurality of circular cylindrical rechargeable batteries and is provided with a heat radiating section. Heat collectors are disposed next to batteries housed in the central region of the external case, and heat-pipes transfer heat from the heat collectors to the external case heat radiating section for radiation. In this structure, battery heat is transferred to the heat collectors, and heat collector heat is transferred by the heat-pipes to the external case heat radiating section for radiation to the outside. A battery pack with this configuration requires special-purpose parts for heat radiation such as heat collectors and heat-pipes, and has the drawback that the structure for heat radiation is complex.
JP 2009-176689 discloses a battery pack, in which short circuit of a lead-plate with a radiating plate is certainly prevented, and respective batteries have efficient radiation of heat through the lead plate and the radiating plate by making a thermal conduction from the lead-plate to the radiating plate.

### SUMMARY OF THE INVENTION

The present invention was developed with the object of correcting these drawbacks. Thus, it is an important object of the present invention to provide a battery pack that can effectively radiate the heat from each battery to the outside of the external case while maintaining a simple heat radiating structure.

The battery pack of the present invention is provided with a plurality of batteries 1 that can be charged, lead-plates 3 that connect to the electrodes 1A at the ends of the batteries 1, and an external case 2 that houses a battery assembly 9 of batteries 1 connected by lead-plates 3. The external case 2 has a heat radiating section 10 on at least one of its opposing surfaces to radiate battery 1 heat. Batteries 1 are arranged in parallel orientation and housed in the external case 2 with their electrodes 1A opposite the heat radiating section 10 inside surfaces. Further, the battery assembly 9 is housed in the external case 2 with the lead-plates 3, which are connected to electrodes 1A at the ends of the batteries 1, disposed at heat radiating section 10 inside surfaces. The lead-plates 3 are thermally connected to the inside surfaces of the heat radiating sections 10. The external case 2 is made of plastic and is provided with inward protruding regions 12 that protrude from the heat radiating section 10 inside surfaces to make contact and thermal connection with the surfaces of the lead-plates 3. The heat radiating sections 10 have depressions 13 established on the outside opposite the inward protruding regions 12. In this battery pack, battery 1 heat is transferred from the lead-plates 3 to heat radiating section 10 inward protruding regions 12 to radiate heat from the external case 2 to the outside.

The battery pack described above has the characteristic that heat from each battery can be effectively radiated from the external case to the outside with a simple heat radiating structure. This is because the lead-plates connected to the electrodes of each battery are thermally joined to the inward protruding regions that stand-off from the inside surfaces of the external case heat radiating sections. Further, by providing inward protruding regions, depressions can be established in the external case. Battery heat is transferred from the lead-plates to heat radiating section inward protruding regions, and radiated to the outside from the external case. In this structure, the lead-plates can be put in tight thermal contact over large areas with the inward protruding regions to efficiently radiate lead-plate heat to the outside.

In addition, the battery pack described above connects lead-plates to electrodes at both ends of all the batteries, and lead-plate heat is radiated to the outside from the external case heat radiating section. This heat radiating configuration makes it possible to uniformly cool all the batteries, and has the characteristic that the temperature differences between individual batteries can be reduced to enable uniform cooling.

In the battery pack of the present invention, heat radiating sections 10 can be provided on both opposing sides of the external case 2. In this battery pack, heat from the lead-plates connected to both ends of the batteries is transferred to the inward protruding regions of heat radiating sections on both sides of the external case to allow battery heat to be radiated to the outside in and extremely efficient manner.

In the battery pack of the present invention, heat radiating fins 14 can be provided in single-piece construction with the depressions 13 of the heat radiating sections 10. In this battery pack, the heat radiating fins reinforce the inward protruding regions and prevent mechanical deformation. At the same time, the heat radiating fins, which are established on outside surfaces opposite the inward protruding regions, increase the heat radiating area for efficient heat radiation. Inward protruding regions that do not mechanically deform can reliably make tight contact with the lead-plates to maintain ideal thermal connection and improve heat transfer from the lead-plates for efficient heat radiation. In particular, when the lead-plates become hot due to battery heating and the hot lead-plates in turn heat the inward protruding regions and reduce their strength, the heat radiating fins on the outside surface reinforce the inward protruding regions and prevent their deformation. Consequently, even when the batteries become hot, the inward protruding regions remain in tight thermal contact with the lead-plates over a wide area and lead-plate heat is efficiently radiated to the outside.

The battery pack of the present invention can be provided with an inner case 4 to hold the batteries 1 in fixed positions. The inner case 4 can be provided with battery loading sections 22 that are open at both ends and dispose the inserted batteries 1 in fixed positions. In addition, the inner case 4 can be provided with recessed regions 21 that align the lead-plates 3 in specified positions connected to the electrodes 1A at the ends of the batteries 1 loaded in the battery loading sections 22. Further, the outlines of the inward protruding regions 12 established on the inside surfaces of the external case 2 heat radiating sections 10 can be made to fit into the recessed regions 21 and dispose the inward protruding regions 12 in specified locations. This allows the inward protruding regions 12 to align inside the recessed regions 21 and thermally connect with the lead-plates 3. In this battery pack, the inward protruding regions established on the external case can reliably make thermal connection with the lead-plates without shifting position to enable efficient battery heat radiation. This is because the lead-plates and inward protruding regions can be disposed in fixed positions by the inner case.

In the battery pack of the present invention, the inner case 4 can be provided with a plurality of columns of recessed regions 21 to dispose a plurality of lead-plates 3 in fixed positions and parallel orientation. Further, a plurality of inward protruding regions 12 can be provided in the external case 2 heat radiating sections 10 for insertion into each recessed region 21. In the battery pack described above, batteries can be efficiently cooled via each lead-plate while reliably preventing short circuits between adjacent lead-plates.

In the battery pack of the present invention, flexible heat transfer sheet 7 can be inserted between the inward protruding regions 12 established on the external case 2 and the lead-plates 3. In this battery pack, the lead-plates can transfer heat more efficiently to the inward protruding regions for more efficient heat radiation.

In the battery pack of the present invention, lead-plates 3 can be sheet-metal that can deform flexibly, and flexible pressure tabs 33 can be provided to resiliently press against the electrodes 1A on the ends of the batteries 1. The flexible pressure tabs 33 can project in a flexible manner towards the battery 1 electrodes 1A, and the flexible pressure tabs 33 can press against the battery 1 electrodes 1A for electrical connection. In this battery pack, the lead-plates can make reliable electrical connection to the battery electrodes without joining the lead-plates to the electrodes by a technique such as spot-welding. At the same time, the lead-plates can be put in tight contact under more favorable conditions with the protruding surfaces of the inward protruding regions to establish thermal connection in an ideal manner. This is because the flexible pressure tabs on the lead-plates not only press resiliently against the battery electrodes for electrical connection, but also resiliently press the lead-plates into tight contact with the protruding surfaces of the inward protruding regions as a result of the reaction force of the flexible pressure tabs pressing against the battery electrodes.

The above and further objects of the present invention as well as the features thereof will become more apparent from the following detailed description to be made in conjunction with the accompanying drawings.

### BRIEF DESCRIPTION OF THE DRAWINGS

Fig. 1 is an oblique view of a battery pack for an embodiment of the present invention;
Fig. 2 is an exploded oblique view of the battery pack shown in Fig. 1;
Fig. 3 is an oblique view from the backside of the battery pack shown in Fig. 2;
Fig. 4 is an exploded oblique view with one part enlarged of the battery assembly of the battery pack shown in Fig. 2;
Fig. 5 is an exploded oblique view of the battery assembly shown in Fig. 4;
Fig. 6 is an enlarged oblique view partly in cross-section of an important part of the battery pack shown in Fig. 1;
Fig. 7 is an exploded oblique view of a battery pack for another embodiment of the present invention; and
Fig. 8 is an enlarged oblique view showing another example of the lead-plates.

### DETAILED DESCRIPTION OF THE EMBODIMENT(S)

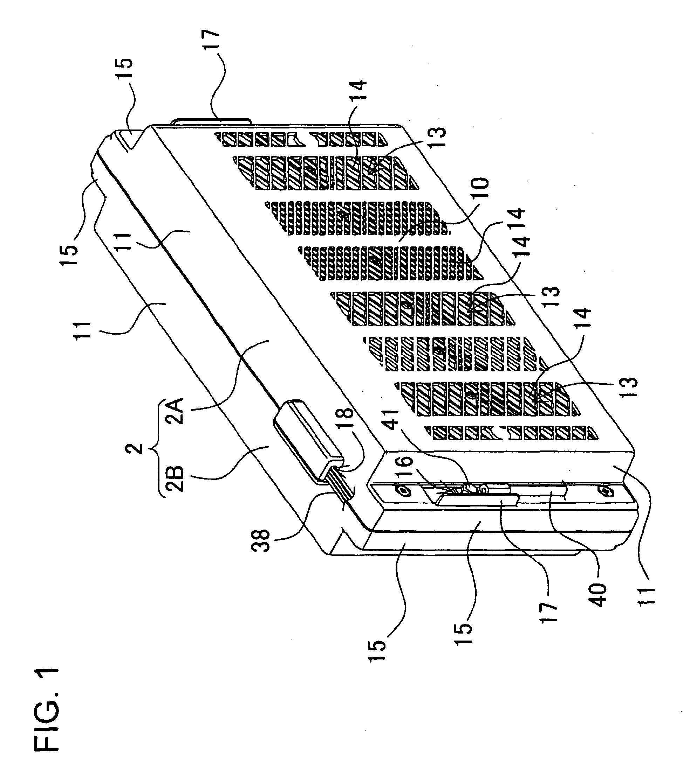

The following describes embodiments of the present invention based on the figures. The battery pack of Figs. 1-6 has a battery assembly 9 housed in an external case 2. The battery assembly 9 has a plurality of batteries 1 that can be charged connected in series and parallel by lead-plates 3. [external case]

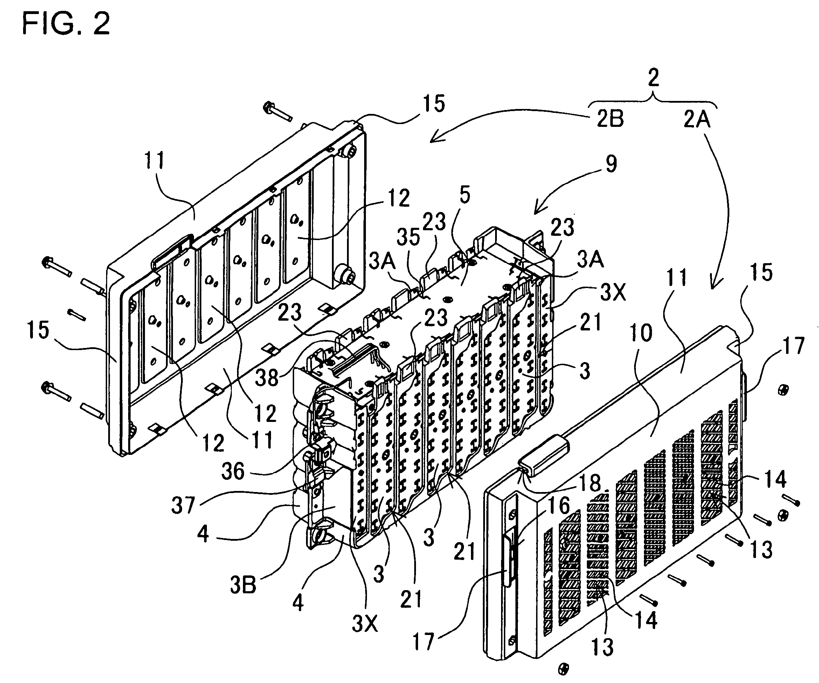

The external case shown in Figs. 2, 3, and 6 houses a battery assembly 9 and has a box-shape with heat radiating sections 10 on opposing surfaces to radiate heat away from the batteries 1. Although the external case 2 of the figures has heat radiating sections 10 provided on both opposing side-walls, the external case can also have a heat radiating section on only one of its opposing side-walls. The external case 2 of the figures has rectangular heat radiating sections 10, and perimeter walls 11 connected around those rectangular heat radiating sections 10. Each battery 1 is loaded in the battery assembly 9 with an orientation that is perpendicular to the external case 2 heat radiating sections 10, and all the electrodes 1A of the batteries 1 are disposed opposite the inside surface of a heat radiating section 10. For a battery pack that houses a battery assembly 9 in the external case 2 in this manner, all the batteries 1 are contained in the external case 2 in parallel orientation. Since lead-plates 3 are connected to the electrodes 1A at the ends of all the batteries 1, the lead-plates 3 are disposed between the batteries 1 and the heat radiating sections 10.

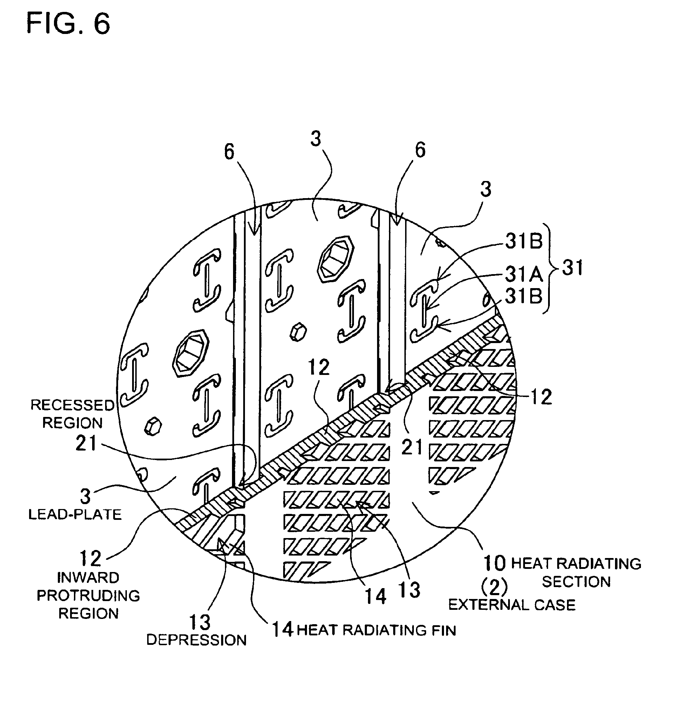

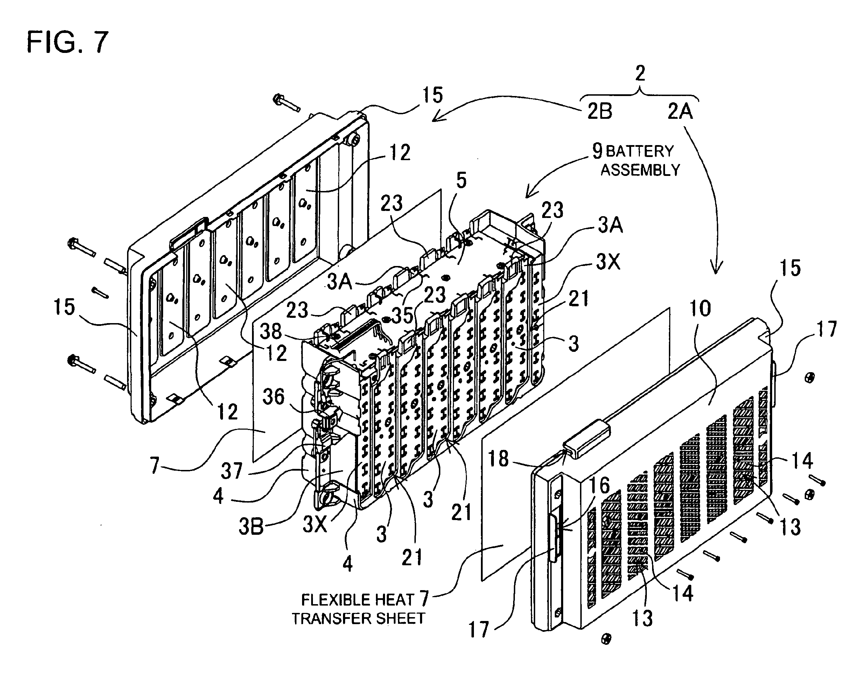

The external case 2 is made of molded plastic. The external case 2 is provided with inward protruding regions 12 on the inside surfaces of the heat radiating sections 10 to make surface-to-surface contact and thermal connection with the lead-plates 3 disposed inside. The protruding surfaces of the inward protruding regions 12 are thermally joined to the surfaces of the lead-plates 3. As shown in Fig. 6, the protruding surfaces of the inward protruding regions 12 tightly contact the surfaces of the lead-plates 3 directly. Or, as shown in Fig. 7, the protruding surfaces of the inward protruding regions 12 tightly contact the lead-plates 3 through flexible heat transfer sheet 7. Further, by establishing inward protruding regions 12 at the external case 2 heat radiating sections 10, depressions 13 can be established in the outside surfaces of the inward protruding regions 12, and heat radiating fins 14 are molded in single-piece construction with the depressions 13.

The battery assembly 9 of Figs. 2-4 has a plurality of lead-plates 3 disposed in a separated manner on both sides of the battery assembly 9. The external case 2 has a plurality of inward protruding regions 12 established to make thermal connection with the surface of each lead-plate 3. The battery assembly 9 of the figures has batteries 1 arranged in fixed positions in a plastic inner case 4. The inner case 4 is provided with a plurality of columns of recessed regions 21 to dispose the plurality of lead-plates 3 in fixed positions and parallel orientation. As shown in Figs. 2, 3, and 6, the external case 2 is provided with a plurality of inward protruding regions 12 in the heat radiating sections 10 that insert into each recessed region 21. The outlines of the inward protruding regions 12 are shaped to fit in the recessed regions 21 and hold the battery assembly 9 in a fixed position inside the external case 2. The outlines of the inward protruding regions 12 are made slightly smaller than the size of the interiors of the recessed regions 21, and the inward protruding regions 12 insert into the recessed regions 21 in a manner that prevents position shift. By inserting the inward protruding regions 12 of the external case 2 into the inner case 4 recessed regions 21, position shift between the external case 2 and the battery assembly 9 can be prevented. Consequently, this external case 2 can house the battery assembly 9 in a fixed position, and the inward protruding regions 12 can be thermally connected to the surfaces of the lead-plates 3.

In the external case 2 shown in Figs. 2, 3, and 6, heat radiating fins 14 are established with the depressions 13 in a manner that does not project out from the heat radiating sections 10. The heat radiating fins 14 of the figures are rows of projections disposed in an intersecting manner. These heat radiating fins 14 can reinforce the heat radiating sections 10 while increasing the area for heat radiation. In particular, heat radiating fins 14 that are arrays of rows of intersecting projections reinforce the inward protruding regions 12 and prevent vertical and horizontal deformation of those inward protruding regions 12. This allows the protruding surfaces of the inward protruding regions 12 to stably press against the surfaces of the lead-plates 3 for thermal connection. In addition, a configuration of heat radiating fins 14 established with depressions 13 in a manner that does not project from the surfaces of the external case 2 does not increase the size of the external case 2 with projecting fins, and can prevent damage to the heat radiating fins 14 caused by projection from the surface. However, the heat radiating fins can also be made taller to project from the surfaces of the external case to increase the heat radiating area and improve the heat radiating efficiency. Although the heat radiating fins 14 described above are established with the depressions 13, the heat radiating fins can also be local protrusions in depressions or hill-and-valley shapes within depressions. However, it is not always necessary to establish heat radiating fins with the depressions on the outside surfaces of the inward protruding regions of the external case heat radiating sections. Here, the surfaces of the external case inward protruding regions are put in contact with the surfaces of the lead-plates for thermal connection and heat is radiated to the outside from inside the depressions.

The external case 2 is molded from plastic resin such as acrylonitrile-butadiene-styrene (ABS) resin. The external case 2 is divided into two parts at the middle of the perimeter walls 11, and is connected together by a fastening method such as screw-fastening or snap-fit connection. The external case 2 can be designed in various sizes and shapes depending on the battery pack application, purpose, operating conditions, and the size, shape, and number of batteries employed. The external case 2 shown in Figs. 1-3 is divided into a first external case 2A and a second external case 2B. The external case 2 of the figures is provided with attachment extensions 15 on its perimeter surfaces to connect the first external case 2A and the second external case 2B. The first external case 2A and the second external case 2B are joined together by connecting corresponding attachment extensions 15 together. The external case 2 is fastened together by screw-fastening. The first external case 2A and the second external case 2B are approximately symmetrical. Here, the battery pack is used with the external case 2 in the standing orientation shown in the figures, namely with one of the perimeter walls 11 at the bottom. However, the external case 2 can also be used with one of the heat radiating section 10 surfaces, which is provided with heat radiating fins 14, at the bottom. In addition, in other battery pack embodiments that include an external case 2, the bottom surface of the external case 2 can be selected depending on battery pack operating conditions.

### [battery assembly]

Figs. 2-5 show the battery assembly 9. The battery assembly 9 of those figures is provided with batteries 1 that can be charged and are disposed next to each other in parallel orientation, an inner case 4 that disposes the batteries 1 in fixed positions, and a plurality of lead-plates 3 weld-attached to electrodes 1A at the ends of each battery 1 disposed in the inner case 4 to electrically connect adjacent batteries 1.

The batteries 1 of the figures are circular cylindrical batteries. A plurality of batteries 1 are arranged in multiple rows and columns with the electrodes 1A at each end of the batteries 1 positioned in common planes. The battery assembly 9 of the figures is an array of batteries 1 with six horizontal rows and fourteen vertical columns. Batteries 1 in adjacent columns are shifted vertically to position batteries 1 in one column midway between batteries 1 in an adjacent column. This allows circular cylindrical batteries 1 to be arrayed in multiple columns in close proximity. However, the battery pack of the present invention is not limited to a configuration having the number and arrangement of batteries described above. For example, batteries can also be disposed in a rectangular grid arrangement (no column shifting).

### [batteries]

The batteries 1 are batteries that can be charged. Circular cylindrical batteries are used as the batteries 1 in the battery pack of the figures, although rectangular batteries and thin-outline batteries can also be used. In the present embodiment, circular cylindrical lithium ion batteries are used as the batteries 1. Lithium ion batteries are suitable for use in a high capacity, high output battery pack. This is because lithium ion batteries can achieve high capacity-to-weight and capacity-to-volume ratios. However, the battery pack of the present invention is not limited to the use of lithium ion batteries, and rechargeable batteries such as nickel-hydride batteries and nickel-cadmium batteries can also be used.

### [inner case]

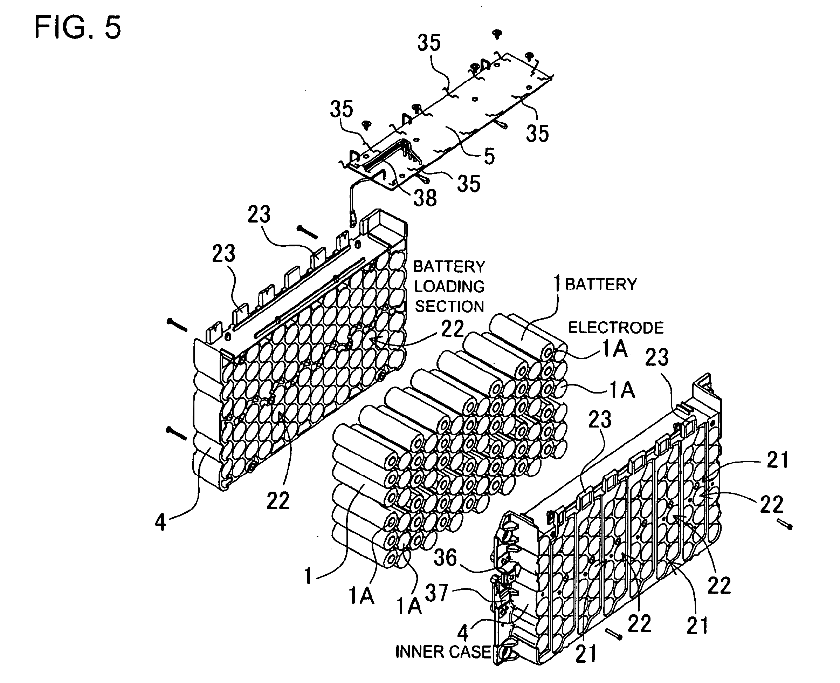

The battery assembly 9 shown in Fig. 5 has batteries 1 inserted in specified positions in inner case 4 battery loading sections 22. As shown in Fig. 5, the inner case 4 is formed in a shape that has circular cylindrical battery loading sections 22. The battery loading sections 22 are formed with interior shapes that can accept circular cylindrical battery insertion. The inner case 4 of the figures is provided with eighty-four battery loading sections 22 to insert batteries 1 in six rows and fourteen columns. Both ends of the battery loading sections 22 are open. The battery pack of Fig. 5 has an inner case 4 that is divided into two pieces in the lengthwise direction of the cylindrical batteries 1 (left and right in the figure). The left and right inner case 4 pieces are formed with both ends of the battery loading sections 22 open to accept circular cylindrical batteries 1. The inner case 4 is molded with an insulating material such as plastic. An inner case 4 molded from plastic in a shape establishing battery loading sections 22 can dispose the plurality of batteries 1 in an array of separate compartments that accurately align those batteries 1 in specified positions. Further, by separating the batteries 1 in independent compartments, conditions that induce battery 1 thermal runaway can be prevented. The connected inner case 4, which is molded as two pieces, exposes the electrodes 1A at the ends of the batteries 1 to the outside from the open ends of the battery loading sections 22. The lead-plates 3 are weld-attached to the exposed electrodes 1A by a technique such as spot-welding or laser-welding. Polycarbonate can be used as the inner case 4 plastic material. This material has high strength and is not easily dissolved by lithium ion battery electrolyte that could leak from a battery. Conversely, ABS resin is easily dissolved by lithium ion battery electrolyte and its use is undesirable.

The inner case 4 is provided with recessed regions 21 formed to hold lead-plates 3 in fixed positions at both open ends of the battery loading sections 22. The lead-plates 3 are inserted into the recessed regions 21 and connected to the electrodes 1A at the ends of the batteries 1. Consequently, the recessed regions 21 are positioned to dispose the lead-plates 3 for connection to the battery 1 electrodes 1A.

### [lead-plates]

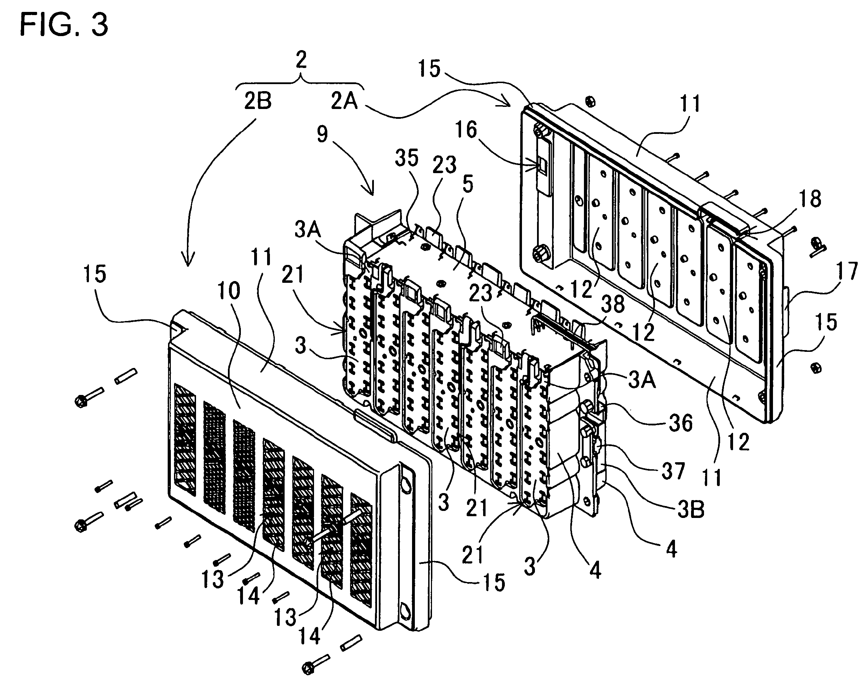

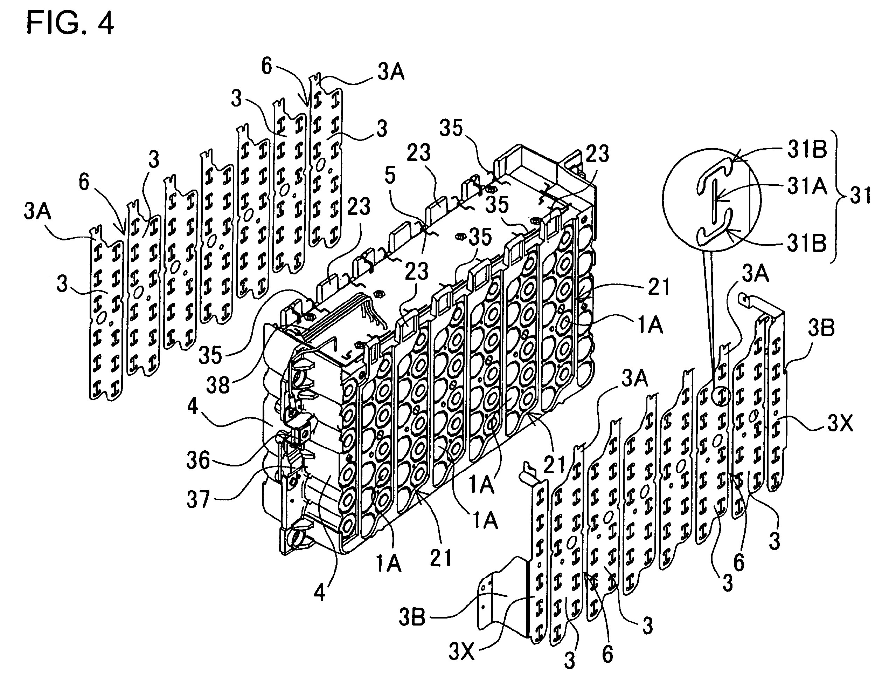

The lead-plates 3 are inserted into the inner case 4 recessed regions 21 and spot-welded or laser-welded to the battery 1 electrodes 1A to connect adjacent batteries 1 in series and parallel. In the battery assembly 9 of Figs. 2-4, a plurality of lead-plates 3 is disposed in parallel orientation with an insulating gap 6 established between each lead-plate 3 and weld-attached to the battery 1 electrodes 1A. The battery assembly 9 of Fig. 4 has seven columns of lead-plates 3 disposed at one end of the batteries 1 (upper left end in Fig. 4), and each lead-plate 3 is connected to two columns of batteries 1 with six batteries 1 in each column. Eight columns of lead-plates 3 are disposed at the other end of the batteries 1 (lower right end in Fig. 4) with the lead-plates 3 at both sides acting as output lead-plates 3X that connect one column of six batteries 1. The remaining six columns of lead-plates 3 connect two columns of batteries 1 with six batteries 1 in each column. These lead-plates 3 connect the six batteries 1 in one column in parallel, and connect batteries 1 in adjacent columns in series. Specifically, the eighty-four batteries 1 are connected with six batteries 1 in parallel and fourteen batteries 1 in series. The output lead-plates 3X disposed at both sides of the lower right end of the batteries 1 in Fig. 4 connect six parallel by fourteen series (eighty-four) batteries 1 to output terminals 36. Each output lead-plate 3X is provided with an output extension 3B on a side edge to connect to an output terminal 36. Each output lead-plate 3X has a band-shaped connecting section that connects six batteries 1 in parallel and a bent section on a side edge that is the output extension 3B disposed on a side of the inner case 4 and connected to an output terminal 36. Since the output extension 3B of an output lead-plate 3X is formed in a wide plate-shape, the electrical resistance of the output extension 3B can be made small. In Fig. 4, the output lead-plate 3X output extension 3B disposed on the left side is connected to the output terminal 36 through a protection device 37. This protection device 37 is a device that can cut-off excessive current flow such as a fuse, a circuit breaker, or a positive thermal coefficient (PTC) current limiting device. The output terminals 36 connected to the output lead-plates 3B on both sides are exposed to the outside through openings 16 (refer to Figs. 2 and 3) provided in the attachment extensions 15 of the external case 2. Further, as shown in Fig. 1, the output terminals 36 exposed outside the external case 2 are connected to power cords 40 via bolts 41 to supply power to electrical equipment. In the external case 2 shown in the figures, insulating barriers 17 are formed in single-piece construction with the external case 2 on the attachment extensions 15 projecting from the sides of the exposed output terminals 36. The output terminal 36 and power cord 40 connection regions are protected by these insulating barriers 17.

The lead-plates 3 are made from sheet-metal with low electrical resistance and superior thermal conductivity. For example, nickel, iron, steel, copper, and copper alloys in sheet-metal form can be plated with a metal such as nickel and used as the lead-plates 3. A sheet-metal thickness that is optimum for weld-attachment, for example, 0.1mm to 0.3mm sheet-metal can be used as the lead-plates 3. If the lead-plates 3 are too thick or too thin, they cannot be spot-welded or laser-welded to the electrodes 1A at the ends of the batteries 1 with an ideal weld-attach. Since a lead-plate that is too thick requires a large amount of thermal energy for heating and fusing, detrimental effects on the batteries increase. Conversely, a lead-plate that is too thin has high electrical and thermal resistance, and does not have sufficient mechanical strength. Therefore, lead-plate thickness is set to an optimum value considering the amount of current flow and the type of application.

The lead-plates 3 of Figs. 4 and 6 are provided with slits 31 in locations that are spot-welded to the battery 1 electrodes 1A to reduce the flow of ineffective welding current. The lead-plates 3 of the figures are provided with vertical slits 31A, and horizontal slits 31B separated from the vertical slits 31A above and below the vertical slits 31A. Spot-welding electrodes are pressed onto both sides of a vertical slit 31 A to weld-attach the lead-plate 3 on both sides of the vertical slit 31A to an electrode 1A at the end of a battery 1. Further, the lead-plates 3 have extensions 3A established at their upper ends for connection to a circuit board 5. The lead-plate 3 extensions 3A are connected to the circuit board 5 via leads 35.

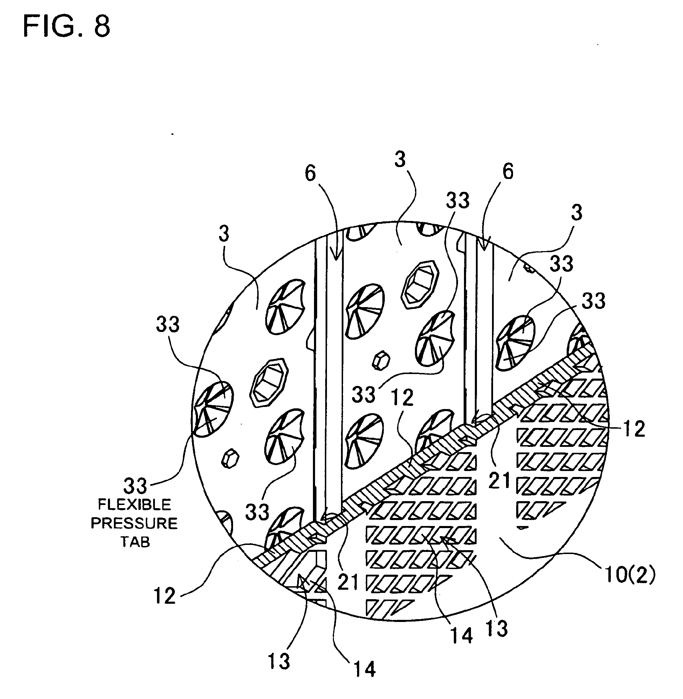

A lead-plate 3 connected to battery 1 electrodes 1A by weld-attachment is stably connected to the batteries 1. The lead-plates 3 of Fig. 8 are provided with flexible pressure tabs 33 made of flexibly deformable sheet-metal that press resiliently against the electrodes 1A at the ends of the batteries 1. The flexible pressure tabs 33 are bent to resiliently protrude towards the battery 1 electrodes 1A. These lead-plates 3 are pressed towards the battery 1 electrodes 1A by the external case 2 inward protruding regions 12 to electrically connect the flexible pressure tabs 33 with the electrodes 1A. The lead-plates 3 of Fig. 8 are provided with a plurality of flexible pressure tabs 33 that extend from the centers of the battery 1 electrodes 1A in patterns that radiate outward towards the electrode 1A perimeters. Each flexible pressure tab 33 becomes wider from the center of an electrode 1A towards the electrode 1A perimeter. In addition, gaps are established between flexible pressure tabs 33 for a configuration that allows each tab 33 to press against an electrode 1A without interference from adjacent tabs 33. In this type of lead-plate 3, electrical connection is made by each of a plurality of flexible pressure tabs 33 pressing independently against an electrode 1A to resolve electrical connection problems. This is because electrical connection to an electrode 1A can be made by any of the many flexible pressure tabs 33. In this type of lead-plate 3, flexible pressure tabs 33 press against battery 1 electrodes 1A, and in reaction to that pressure force, the lead-plate 3 is pressed resiliently against the surface of an inward protruding region 12. Specifically, the resilience of the flexible pressure tabs 33 presses the tips of the tabs against the battery 1 electrodes 1A in a flexible manner, and presses the parts of the lead-plate 3 with no flexible pressure tabs 33 against the surface of the inward protruding region 12 in a flexible manner. Consequently, while resolving connection problems between the lead-plates 3 and battery 1 electrodes 1A, this structure also puts the lead-plates 3 in good contact with the inward protruding regions 12 for effective heat transfer from the battery 1 electrodes 1A to the inward protruding regions 12. Further, since the lead-plates 3 do not separate from the battery 1 electrodes 1A due to conditions such as vibration, this battery pack is suitable for applications accompanied by vibration such as in a vehicle battery pack.

### [circuit board]

The circuit board 5 that is connected to each lead-plate 3 has electronic parts mounted to implement battery 1 charging control, protection circuitry, and remaining battery capacity computation circuitry. In addition, the circuit board 5 acquires and computes various data such as remaining capacity, abnormal conditions, discharge suspension (commands), and charging suspension (commands). These data are transmitted via lead wires 38 to the electrical equipment that is supplied with power from the battery pack (for example, a two-wheeled vehicle). The electrical equipment performs various control operations based on these data. The external case 2 shown in Figs. 1-3 is provided with a lead wire opening 18 through the upper perimeter wall 11 to pass the lead wires 38. The lead wires 38 are run to the outside through the lead wire opening 18.

As shown in Figs. 2-5, the circuit board 5 is attached to the upper surface of the inner case 4. The inner case 4 is provided with a plurality of alignment ribs 23 formed in single-piece construction with the inner case 4 around the circuit board 5 to align the circuit board 5 in a specified position. The circuit board 5 is guided into a specified position surrounded by the alignment ribs 23 on the upper surface of the inner case 4, and fastened in that position by screws.

The protection circuitry mounted on the circuit board 5 is circuitry such as a circuit to detect battery 1 over-charging and over-discharging and to control current, and a circuit to detect battery over-charging and cut-off current. To detect battery 1 over-charging and over-discharging, the protection circuitry is provided with a voltage detection circuit (not illustrated) that detects battery 1 voltage. The voltage detection circuit detects the voltage of the batteries 1 via the lead-plates 3 and prevents over-charging and over-discharging.

### [flexible heat transfer sheet]

The battery pack shown in Fig. 7 has flexible heat transfer sheet 7 disposed between the inside surfaces of the external case 2 and the surfaces of the lead-plates 3. Inward protruding regions 12 of the external case 2 make tight contact with the surfaces of the lead-plates 3 via the flexible heat transfer sheet 7. The flexible heat transfer sheet 7 is sandwiched between the lead-plates 3 and the inside surfaces of the external case 2 to transfer heat from the lead-plates 3 to the external case 2. The flexible heat transfer sheet 7 is resilient, cushioning sheet with superior heat conductivity such as resilient silicone resin sheet. Although not illustrated, a flexible heat transfer sheet 7 has one side in tight contact with the lead-plates 3 and the other side in tight contact with the inward protruding regions 12 of the external case 2 to efficiently transfer lead-plate 3 heat to the external case 2. Flexible heat transfer sheet 7 in tight contact with both the lead-plates 3 and the external case 2 efficiently transfers lead-plate 3 heat to the external case 2, and battery 1 heat is effectively radiated through the lead-plates 3 out of the external case 2. The flexible heat transfer sheet 7 can be made thick and tightly attached to both the lead-plates 3 and the inside surfaces of the external case 2. Conversely, the flexible heat transfer sheet 7 can be made thin to efficiently transfer lead-plate 3 heat to the external case 2. Therefore, thickness of the flexible heat transfer sheet 7 is made, for example, 0.5mm to 3mm considering the lead-plate 3 to external case 2 contact tightness and thermal conductivity. The flexible heat transfer sheet 7 described above is slightly squeezed together by connecting the first external case 2A and the second external case 2B together to contain the battery assembly 9 inside the external case 2. The lead-plates 3 on one side and the inside surfaces of the external case 2 on the other side make tight contact with the flexible heat transfer sheet 7 due to resilient restoring forces in the squeezed flexible heat transfer sheet 7.

The battery pack described above is assembled in the following manner.
(1) As shown in Fig. 5, a plurality of batteries 1 are inserted with prescribed orientation (polarity) into battery loading sections 22 in the inner case 4. The batteries 1 of the figures are inserted in the same direction (polarity) in vertical columns, and in alternating reverse directions (polarities) in lateral left-to-right rows. After loading all the batteries 1 in the inner case 4 battery loading sections 22, the pair of inner case 4 pieces are fastened together.
(2) As shown in Fig. 4, the circuit board 5 is mounted on top of the inner case 4. The circuit board 5 is aligned inside the alignment ribs 23 on the upper surface of the inner case 4 and attached via screws.
(3) The lead-plates 3 are positioned inside the recessed regions 21 of the inner case 4 and weld-attached to the electrodes 1A at the ends of each battery 1. The lead-plates 3 are weld-attached to the battery 1 electrodes 1A exposed from the open ends of the inner case 4 battery loading sections 22 by a technique such as spot-welding or laser-welding. Adjacent lead-plates 3 are disposed in columns separated by insulating gaps 6 to avoid contact. Lead-plate 3 extensions 3A are connected to the circuit board 5 via leads 35.
(4) As shown in Figs. 2 and 3, the battery assembly 9 is enclosed inside the external case 2. Here, inward protruding regions 12 on the inside surfaces of the external case 2 heat radiating sections 10 are disposed opposite the battery assembly 9 lead-plates 3 to thermally couple the lead-plates 3 to the surfaces of the inward protruding regions 12. The surfaces of the inward protruding regions shown in Fig. 6 make tight, direct contact with the surfaces of the lead-plates 3 for thermal connection. In the battery pack shown in Fig. 7, flexible heat transfer sheet 7 is sandwiched between the lead-plates 3 and the inside surfaces of the external case 2, and the inward protruding regions 12 are put in tight contact and thermally coupled with the lead-plates 3 via the flexible heat transfer sheet 7. The battery assembly 9 is installed in the external case 2 with the lead-plates 3 in tight, direct contact with the inside surfaces of the external case 2 for thermal connection, or with the lead-plates 3 in tight thermal contact with the inside surfaces of the external case 2 via flexible heat transfer sheet 7.
(5) The first external case 2A and second external case 2A of the external case 2 are joined together.

The battery pack of the present invention is suitable for use in applications that connect a plurality of batteries in parallel and connect those parallel connected batteries in series for higher output. For example, the battery pack can be used favorably in applications such as an electric wheel chair, an electric powered bicycle, an electric powered scooter or motorcycle, an electric tool, and a dedicated operation robot.

The present application is based on Application No. 2008-233712 filed in Japan on September 11, 2008.

### LABELS

- 1: BATTERY
- 1A: ELECTRODE
- 2: EXTERNAL CASE
- 2A: FIRST EXTERNAL CASE
- 2B: SECOND EXTERNAL CASE
- 3: LEAD-PLATE
- 3X: OUTPUT LEAD-PLATE
- 3A: EXTENSION
- 3B: OUTPUT EXTENSION
- 4: INNER CASE
- 5: CIRCUIT BOARD
- 6: INSULATING GAP
- 7: FLEXIBLE HEAT TRANSFER SHEET
- 9: BATTERY ASSEMBLY
- 10: HEAT RADIATING SECTION
- 11: PERIMETER WALLS
- 12: INWARD PROTRUDING REGION
- 13: DEPRESSION
- 14: HEAT RADIATING FIN
- 15: ATTACHMENT EXTENSION
- 16: OPENING
- 17: INSULATING BARRIER
- 18: LEAD WIRE OPENING
- 21: RECESSED REGION
- 22: BATTERY LOADING SECTION
- 23: ALIGNMENT RIB
- 31: SLITS
- 31A: VERTICAL SLITS
- 31B: HORIZONTAL SLITS
- 33: FLEXIBLE PRESSURE TAB
- 35: LEAD
- 36: OUTPUT TERMINAL
- 37: PROTECTION DEVICE
- 38: LEAD WIRES
- 40: POWER CORD
- 41: BOLT

## Claims

1. A battery pack comprising:
a plurality of batteries (1) that can be charged;
lead-plates (3) that connect to electrodes (1A) at the ends of the batteries (1); and
an external case (2) that houses a battery assembly (9) with the batteries (1) connected via the lead-plates (3),
**characterized in that**
the external case (2) has a heat radiating section (10) established on at least one of its opposing surfaces to radiate battery (1) heat; batteries (1) are disposed in parallel orientation with the electrodes (1A) at the ends of the batteries (1) opposite the inside surface of the heat radiating section (10); the battery assembly (9) is housed inside the external case (2) disposing the lead-plates (3) connecting battery (1) electrodes (1A) at the inside surface of the heat radiating section (10) to thermally couple the lead-plates (3) to the inside surface of the heat radiating section (10);
wherein the external case (2) is made of plastic and provided with inward protruding regions (12) on the inside surface of the heat radiating section (10); the inward protruding regions (12) make surface contact and thermally couple with the lead-plates (3) disposed inside the external case (2); the heat radiating section (10) has depressions (13) in the outside surfaces of the inward protruding regions (12); and battery (1) heat is transferred from the lead-plates (3) to the heat radiating section (10) inward protruding regions (12) and radiated from the external case (2) to the outside.

2. The battery pack as cited in claim 1 wherein the external case (2) has heat radiating sections (10) on both opposing surfaces.

3. The battery pack as cited in claim 1 wherein heat radiating fins (14) are formed in single-piece construction in the depressions (13) of the heat radiating section (10).

4. The battery pack as cited in claim 3 wherein the external case (2) is provided with heat radiating fins (14) in the depressions (13) of the heat radiating section (10) that do not protrude from the surface of the heat radiating section (10).

5. The battery pack as cited in claim 4 wherein heat radiating fins (14) are arrays of a plurality of rows of intersecting projections.

6. The battery pack as cited in claim 1 wherein an inner case (4) is provided to dispose the batteries (1) in fixed positions.

7. The battery pack as cited in claim 6 wherein the inner case (4) has battery loading sections (22) that are open at both ends and accept battery (1) insertion into fixed positions; recessed regions (21) are provided in battery loading section (22) surfaces to dispose the lead-plates (3), which are connected to the electrodes (1A) at the ends of the batteries (1) loaded in the battery loading sections (22), in fixed positions; the outlines of the inward protruding regions (12) established in the external case (2) heat radiating section (10) are shaped to allow insertion into the recessed regions (21) for retention in fixed positions; and the inward protruding regions (12) are aligned and inserted into the recessed regions (21) to thermally couple the inward protruding regions (12) to the lead-plates (3).

8. The battery pack as cited in claim 6 wherein the inner case (4) has a plurality of recessed regions (21) to dispose a plurality of lead-plates (3) in fixed positions and in parallel orientation; and the external case (2) heat radiating section (10) is provided with a plurality of inward protruding regions (12) that insert into each recessed region (21).

9. The battery pack as cited in claim 8 wherein the inward protruding regions (12) have outlines shaped smaller than the insides of the recessed regions (21), and the inward protruding regions (12) insert into the recessed regions (21) in a manner that does not shift in position.

10. The battery pack as cited in claim 1 wherein flexible heat transfer sheet (7) is sandwiched between external case (2) inward protruding region (12) surfaces and the lead-plates (3).

11. The battery pack as cited in claim 10 wherein the flexible heat transfer sheet (7) is flexible sheet made from silicone resin.

12. The battery pack as cited in claim 10 wherein the flexible heat transfer sheet (7) has one side in tight contact with the lead-plates (3) and the other side in tight contact with the inward protruding regions (12) of the external case (2) to transfer lead-plate (3) heat to the external case (2).

13. The battery pack as cited in claim 1 wherein the lead-plates (3) are flexibly deformable sheet-metal and have flexible pressure tabs (33) that resiliently press against the battery (1) electrodes (1A); and the flexible pressure tabs (33) resiliently protrude towards the battery (1) electrodes (1A) and press against the electrodes (1A) for electrical connection.

14. The battery pack as cited in claim 13 wherein the flexible pressure tabs (33) are a plurality of flexible pressure tabs (33) that extend from the centers of the battery (1) electrodes (1A) in patterns that radiate outward towards the electrode (1A) perimeters.

15. The battery pack as cited in claim 14 wherein the flexible pressure tabs (33) becomes wider from the center of an electrode (1A) towards the electrode (1A) perimeter.

16. The battery pack as cited in claim 1 wherein the lead-plates (3) are weld-attached for connection to the electrodes (1A) at the ends of the batteries (1).

## Patentansprüche

1. Batteriepack, umfassend:
eine Vielzahl von Batterien (1), die geladen werden können;
Leitungsplatten (3), die mit Elektroden (1A) an den Enden der Batterien (1) verbunden sind; und
ein externes Gehäuse (2), das eine Batterieanordnung (9) mit den Batterien (1), die über die Leitungsplatten (3) verbunden sind, aufnimmt,
**dadurch gekennzeichnet, dass**
das externe Gehäuse (2) einen Wärmestrahlungsabschnitt (10) aufweist, der auf mindestens einer von seinen gegenüberliegenden Oberflächen gebildet ist, um Wärme der Batterie (1) zu strahlen; wobei Batterien (1) in paralleler Orientierung mit den Elektroden (1A) an den Enden der Batterien (1) gegenüber der inneren Oberfläche des Wärmestrahlungsabschnitts (10) angeordnet sind; wobei die Batterieanordnung (9) in dem externen Gehäuse (2) aufgenommen ist, wobei die Leitungsplatten (3), welche die Elektroden (1A) der Batterie (1) verbinden, an der inneren Oberfläche des Wärmestrahlungsabschnitts (10) angeordnet sind, um die Leitungsplatten (3) mit der inneren Oberfläche des Wärmestrahlungsabschnitts (10) thermisch zu koppeln;
wobei das externe Gehäuse (2) aus Kunststoff hergestellt und mit einwärts vorragenden Bereichen (12) auf der inneren Oberfläche des Wärmestrahlungsabschnitts (19) versehen ist; wobei die einwärts vorragenden Bereiche (12) mit den Leitungsplatten (3), die innerhalb des externen Gehäuses (2) angeordnet sind, Oberflächenkontakt herstellen und thermisch koppeln,
wobei der Wärmestrahlungsabschnitt (10) in den äußeren Oberflächen der einwärts vorragenden Bereiche (12) Vertiefungen (13) aufweist; und wobei Wärme der Batterie (1) von den Leitungsplatten (3) zu den einwärts vorragenden Bereichen (12) des Wärmestrahlungsabschnitts (10) übertragen und von dem externen Gehäuse (2) nach außen gestrahlt wird.

2. Batteriepack gemäß Anspruch 1, wobei das externe Gehäuse (2) Wärmestrahlungsabschnitte (10) auf beiden gegenüberliegenden Oberflächen aufweist.

3. Batteriepack gemäß Anspruch 1, wobei Wärmestrahlungsrippen (14) in einem einstückigen Aufbau in den Vertiefungen (13) des Wärmestrahlungsabschnitts (10) gebildet sind.

4. Batteriepack gemäß Anspruch 3, wobei das externe Gehäuse (2) mit Wärmestrahlungsrippen (14) in den Vertiefungen (13) des Wärmestrahlungsabschnitts (10) versehen ist, die nicht von der Oberfläche des Wärmestrahlungsabschnitts (10) vorragen.

5. Batteriepack gemäß Anspruch 4, wobei die Wärmestrahlungsrippen (14) Anordnungen einer Vielzahl von Reihen von sich kreuzenden Vorsprüngen sind.

6. Batteriepack gemäß Anspruch 1, wobei ein inneres Gehäuse (4) vorgesehen ist, um die Batterien (1) in festen Positionen anzuordnen.

7. Batteriepack gemäß Anspruch 6, wobei das innere Gehäuse (4) Batterieladeabschnitte (22) aufweist, die an beiden Enden offen sind und eine Einführung der Batterie (1) in feste Positionen annehmen; wobei ausgenommene Bereiche (21) in den Oberflächen des Batterieladeabschnitts (22) vorgesehen sind, um die Leitungsplatten (3) anzuordnen, die mit den Elektroden (1A) an den Enden der Batterien (1) verbunden sind, die in die Batterieladeabschnitte (22) in festen Positionen geladen sind; wobei die Außenlinien der einwärts vorragenden Bereiche (12), die in dem Wärmestrahlungsabschnitt (10) des externen Gehäuses (2) hergestellt sind, geformt sind, um die Einfügung in die ausgenommenen Bereiche (21) für eine Beibehaltung in den festen Positionen zu erlauben; und wobei die einwärts vorragenden Bereichen (12) ausgerichtet und in die ausgenommenen Bereiche (21) eingeführt wird, um die einwärts vorragenden Bereiche (12) mit den Leitungsplatten (3) thermisch zu koppeln.

8. Batteriepack gemäß Anspruch 6, wobei das innere Gehäuse (4) eine Vielzahl von ausgenommenen Bereichen (21) aufweist, um eine Vielzahl von Leitungsplatten (3) in festen Positionen und in paralleler Orientierung anzuordnen; und der Wärmestrahlungsabschnitt (10) des externen Gehäuses (2) mit einer Vielzahl von einwärts vorragenden Bereichen (12) versehen ist, die in jeden ausgenommenen Bereich (21) eingesetzt sind.

9. Batteriepack gemäß Anspruch 8, wobei die einwärts vorragenden Bereiche (12) Außenlinien aufweisen, die kleiner als die Innenseiten der ausgenommenen Bereiche (21) geformt sind, und die einwärts vorragenden Bereiche (12) in die ausgenommenen Bereiche (21) in einer Weise eingesetzt sind, dass keine Positionsverschiebung erfolgt.

10. Batteriepack gemäß Anspruch 1, wobei ein flexibler Wärmeübertragungsbogen (7) zwischen den Oberflächen der einwärts vorragenden Bereiche (12) des externen Gehäuses (2) und den Leitungsplatten (3) eingelegt ist.

11. Batteriepack gemäß Anspruch 10, wobei der flexible Wärmeübertragungsbogen (7) ein flexibler Bogen ist, der aus Silikonharz hergestellt ist.

12. Batteriepack gemäß Anspruch 10, wobei der flexible Wärmeübertragungsbogen (7) eine Seite in dichtem Kontakt mit den Leitungsplatten (3) und die andere Seite in dichtem Kontakt mit den einwärts vorragenden Bereichen (12) des externen Gehäuses (2) aufweist, um Leitungsplatten-(3)-Wärme zu dem externen Gehäuse (2) zu übertragen.

13. Batteriepack gemäß Anspruch 1, wobei die Leitungsplatten (3) flexibles deformierbares Blech sind und flexible Druckstreifen (33) aufweisen, die federnd gegen die Batterie-(1)-Elektroden (1A) drücken; und die flexiblen Druckstreifen (33) federn hinzu den Batterie-(1)-Elektroden (1A) vorstehen und gegen die Elektroden (1A) für eine elektrische Verbindung drücken.

14. Batteriepack gemäß Anspruch 13, wobei die flexiblen Druckstreifen (33) eine Vielzahl von flexiblen Druckstreifen (33) sind, die sich von den Zentren der Batterie-(1)-Elektroden (1A) in Mustern erstrecken, die auswärts hin zu den Elektroden-(1A)-Ränder strahlenförmig führen.

15. Batteriepack gemäß Anspruch 14, wobei die flexiblen Druckstreifen (33) von dem Zentrum einer Elektrode (1A) hin zu dem Elektroden-(1A)-Rand breiter werden.

16. Batteriepack gemäß Anspruch 1, wobei die Leitungsplatten (3) zur Verbindung mit den Elektroden (1A) an den Enden der Batterien (1) verschweißungs-verbunden sind.

## Revendications

1. Bloc-batterie comprenant :
une pluralité de batteries (1) qui peuvent être chargées ;
des plaques conductrices (3) qui se raccordent aux électrodes (1A) au niveau des extrémités des batteries (1) ; et
un boîtier externe (2) qui loge un ensemble de batterie (9), avec les batteries (1) raccordées via les plaques conductrices (3),
**caractérisé en ce que** :
le boîtier externe (2) a une section de rayonnement de chaleur (10) établie sur au moins l'une de ses surfaces opposées pour rayonner la chaleur de la batterie (1) ; les batteries (1) sont disposées selon une orientation parallèle avec les électrodes (1A) aux extrémités des batteries (1) opposées à la surface interne de la section de rayonnement de chaleur (10) ; l'ensemble de batterie (9) est logé à l'intérieur du boîtier externe (2) disposant les plaques conductrices (3) raccordant les électrodes (1A) de la batterie (1) au niveau de la surface intérieure de la section de rayonnement de chaleur (10) pour coupler thermiquement les plaques conductrices (3) à la surface intérieure de la section de rayonnement de chaleur (10) ;
dans lequel le boîtier externe (2) est réalisé à partir de plastique et prévu avec des régions en saillie vers l'intérieur (12) sur la surface intérieure de la section de rayonnement de chaleur (10) ; les régions en saillie vers l'intérieur (12) établissent un contact de surface et se couplent thermiquement avec les plaques conductrices (3) disposées à l'intérieur du boîtier externe (2) ; la section de rayonnement de chaleur (10) a des dépressions (13) dans les surfaces extérieures des régions en saillie vers l'intérieur (12) ; et la chaleur de la batterie (1) est transférée des plaques conductrices (3) aux régions en saillie vers l'intérieur (12) de la section de rayonnement de chaleur (10) et rayonnée du boîtier externe (2) jusqu'à l'extérieur.

2. Bloc-batterie selon la revendication 1, dans lequel le boîtier externe (2) a des sections de rayonnement de chaleur (10) sur les deux surfaces opposées.

3. Bloc-batterie selon la revendication 1, dans lequel des ailettes de rayonnement de chaleur (14) sont formées selon une construction d'un seul tenant dans les dépressions (13) de la section de rayonnement de chaleur (10).

4. Bloc-batterie selon la revendication 3, dans lequel le boîtier externe (2) est prévu avec des ailettes de rayonnement de chaleur (14) dans les dépressions (13) de la section de rayonnement de chaleur (10) afin de ne pas faire saillie de la surface de la section de rayonnement de chaleur (10).

5. Bloc-batterie selon la revendication 4, dans lequel les ailettes de rayonnement de chaleur (14) sont des réseaux d'une pluralité de rangées de saillies d'intersection.

6. Bloc-batterie selon la revendication 1, dans lequel un boîtier interne (4) est prévu pour disposer les batteries (1) dans des positions fixes.

7. Bloc-batterie selon la revendication 6, dans lequel le boîtier interne (4) a des sections de chargement de batterie (22) qui sont ouvertes au niveau des deux extrémités et accepte l'insertion de la batterie (1) dans des positions fixes ; des régions évidées (21) sont prévues dans les surfaces de la section de chargement de batterie (22) pour disposer les plaques conductrices (3) qui sont raccordées aux électrodes (1A) aux extrémités des batteries (1) chargées dans les sections de chargement de batterie (22), dans les positions fixes : les contours des régions en saillie vers l'intérieur (12) dans la section de rayonnement de chaleur (10) du boîtier externe (2) sont formés pour permettre l'insertion dans les régions évidées (21) pour la retenue en positions fixes ; et les régions en saillie vers l'intérieur (12) sont alignées et insérées dans les régions évidées (21) pour coupler thermiquement les régions en saillie vers l'intérieur (12) aux plaques conductrices (3).

8. Bloc-batterie selon la revendication 6, dans lequel le boîtier interne (4) a une pluralité de régions évidées (21) afin de disposer une pluralité de plaques conductrices (3) en positions fixes et selon une orientation parallèle ; et la section de rayonnement de chaleur (10) du boîtier externe (2) est prévue avec une pluralité de régions en saillie vers l'intérieur (12) qui s'insèrent dans chaque région évidée (21).

9. Bloc-batterie selon la revendication 8, dans lequel les régions en saillie vers l'intérieur (12) ont des contours plus petits que les intérieurs des régions évidées (21), et les régions en saillie vers l'intérieur (12) s'insèrent dans les régions évidées (21) de sorte qu'elles ne se déplacent pas du point de vue de la position.

10. Bloc-batterie selon la revendication 1, dans lequel une feuille de transfert de chaleur souple (7) est prise en sandwich entre les surfaces de la région en saillie vers l'intérieur (12) du boîtier externe (2) et les plaques conductrices (3).

11. Bloc-batterie selon la revendication 10, dans lequel la feuille de transfert de chaleur souple (7) est une feuille souple réalisée à partir de résine de silicium.

12. Bloc-batterie selon la revendication 10, dans lequel la feuille de transfert de chaleur souple (7) a un côté en contact intime avec les plaques conductrices (3) et l'autre côté en contact intime avec les régions en saillie vers l'intérieur (12) du boîtier externe (2) pour transférer la chaleur de la plaque conductrice (3) au boîtier externe (2).

13. Bloc-batterie selon la revendication 1, dans lequel les plaques conductrices (3) sont une feuille métallique déformable à la flexion et ont des languettes de pression flexibles (33) qui appuient de manière élastique contre les électrodes (1A) de la batterie (1) ; et les languettes de pression flexibles (33) font saillie de manière élastique vers les électrodes (1A) de la batterie (1) et appuient contre les électrodes (1A) pour la connexion électrique.

14. Bloc-batterie selon la revendication 13, dans lequel les languettes de pression flexibles (33) sont une pluralité de languettes de pression flexibles (33) qui s'étendent à partir des centres des électrodes (1A) de la batterie (1) selon des modèles qui rayonnent vers l'extérieur vers les périmètres de l'électrode (1A).

15. Bloc-batterie selon la revendication 14, dans lequel les languettes de pression flexibles (33) s'élargissent à partir du centre d'une électrode (1A) vers le périmètre de l'électrode (1A).

16. Bloc-batterie selon la revendication 1, dans lequel les plaques conductrices (3) sont soudées pour le raccordement aux électrodes (1A) au niveau des extrémités des batteries (1).
